# FASCICULE DE BREVET EUROPEEN

(11) **EP 3 845 376 B1**
(45) Date de publication et mention de la délivrance du brevet: **25.10.2023**
(21) Numéro de dépôt: 20215051.2
(22) Date de dépôt: 17.12.2020
(51) Int. Cl.: B32B 5/02, B32B 5/06, B32B 5/18, B32B 5/20, B32B 5/24, B32B 5/26, B32B 7/12, B32B 27/08, B32B 27/12, B32B 27/30, D06N 7/00

(54) **REVETEMENT DE SOL A ENVERS TEXTILE A RESISTANCE AU POINÇONNEMENT ET A PROPRIETE D'ATTENUATION ACOUSTIQUE AMELIOREES**
TEXTILKASCHIERTER BODENBELAG MIT VERBESSERTER DURCHSTOSSFESTIGKEIT UND VERBESSERTEN SCHALLDÄMMENDEN EIGENSCHAFTEN
FLOOR COVERING WITH TEXTILE UNDERSIDE WITH RESISTANCE TO PERFORATION AND IMPROVED SOUND ATTENUATION PROPERTIES

(30) Priorité: 30.12.2019 FR 1915712
(43) Date de publication de la demande: 07.07.2021
(73) Titulaire: GERFLOR, 69100 Villeurbanne (FR)
(72) Inventeur: DUMANT, Nicolas, 84600 VALREAS (FR)
(74) Mandataire: Cabinet Laurent & Charras

(56) Documents cités:
- EP-A1- 1 961 553
- EP-A2- 1 360 366
- EP-B1- 1 360 366
- FR-A1- 3 076 250

## Description

### Domaine technique

La présente invention concerne une structure multicouche pour la réalisation d'un revêtement de sol.

Plus précisément, la présente invention concerne les revêtements de sol à pose libre, souples et résilients, par exemple présentés sous forme de rouleaux, de dalles ou de lames.

### Art antérieur

Il est connu du document EP1360366 une structure multicouche en matière plastique présentant des solutions afin d'améliorer les propriétés d'atténuation acoustique ou la résistance au poinçonnement d'un revêtement de sol.

L'inconvénient de ce document de l'art antérieur réside dans le fait que les solutions proposées pour améliorer les propriétés d'atténuation acoustique du revêtement dégradent les caractéristiques mécaniques de celui-ci. En effet, on propose dans l'art antérieur de lier un envers textile à une couche supérieure moussée, ce qui a pour inconvénient de fragiliser la structure multicouche.

On propose également d'augmenter l'épaisseur de non tissé, mais cela a pour effet de dégrader la résistance au poinçonnement, par ailleurs le non-tissé reste un matériau résilient qui n'apporte pas de rigidité : ainsi plus on augmente le poids de la structure multicouche en augmentant l'épaisseur de non-tissé, plus il faudra augmenter la rigidité pour proposer un produit en pose semi libre, voire en pose totalement libre.

Il est connu également le document FR3076250 qui propose d'inclure au sein d'une structure multicouche une double armature avec grille. Il ne s'agit ici que d'améliorer la résistance au poinçonnement du revêtement, sans aucune solution pour améliorer les propriétés d'atténuation acoustique.

Il est connu du document EP1961553 A1 une structure multicouche comprenant deux armatures de renfort, mais sans voile de fibres de verre.

Il en résulte que l'art antérieur précité ne divulgue aucune structure multicouche permettant d'obtenir à la fois un revêtement résistant au poinçonnement, doté d'une bonne rigidité mécanique ainsi que des propriétés d'atténuation acoustique améliorées. Par ailleurs, certaines solutions de l'art antérieur proposées pour améliorer les propriétés mécaniques du revêtement se font au détriment des propriétés acoustiques, et vice-versa.

### Exposé de l'invention

L'un des buts de l'invention est donc de remédier aux problèmes précités en fournissant une structure multicouche pour la réalisation d'un revêtement de sol, par exemple destiné à la pose libre, sans colle, et présentant à la fois des propriétés de résistance au poinçonnement et d'atténuation acoustique améliorées. L'invention vise notamment à obtenir un poinçonnement statique rémanent 2h30 inférieur ou égal à 0,30 mm et un poinçonnement statique rémanent 48h inférieur ou égal à 0,30 mm, mesuré selon la norme ISO 24343-1.

L'invention a aussi pour but d'améliorer la pose libre du revêtement, l'absorption des défauts du support de pose, tout en permettant une résistance au trafic et en conservant une stabilité dimensionnelle et des capacités de dilatation et de plombage.

L'invention vise notamment à fournir une structure multicouche pour la réalisation d'un revêtement de sol présentant un effet plombant et dont la pose peut se faire sans colle, notamment pour des zones de trafic léger ou moyen selon le classement U.P.E.C U2S, voire U3 ou U4 ; et conservant des propriétés d'atténuation acoustique selon la norme EN ISO 10140-3 de réduction au bruit de choc pondéré et de sonorité à la marche selon NF EN 16205. L'invention vise à atteindre une réduction au bruit de choc pondéré supérieure ou égale à 19dB. L'invention vise également à atteindre un poinçonnement statique rémanent à 2h30 inférieur 0,35mm selon le classement UPEC P2, voire inférieur à 0,20mm du classement UPEC P3 selon la norme NF-EN-424.

À cet effet, il a été mis au point une structure multicouche pour la réalisation d'un revêtement de sol comprenant une couche supérieure d'usure liée à une couche renforcée avec une première armature de renfort.

Selon l'invention, la face inférieure de la couche renforcée est liée avec un envers non tissé renforcé avec une deuxième armature de renfort.

L'envers non tissé, en contact avec le sol, et renforcé, permet d'apporter à la structure multicouche de la rigidité, une capacité à plomber, une stabilité dimensionnelle et une résistance à la dilatation pour une pose semi-libre ou libre. L'envers non tissé permet également d'absorber les défauts du support et d'atteindre de meilleures performances de d'atténuation acoustique, sans dégrader la résistance au poinçonnement.

L'envers non tissé est lié à la face inférieure de la couche renforcée par l'intermédiaire de moyens de liaison, de préférence sous la forme d'une couche moussée, d'une couche de colle, d'un matériau thermofusible ou d'une couche de plastisol gélifié.

De manière avantageuse, l'utilisation d'une couche moussée permet d'améliorer davantage les propriétés d'atténuation acoustique et de renforcer la structure, étant donné que le positionnement de cette couche moussée entre deux armatures de renfort permet de limiter le risque de fragilisation du revêtement. En effet, plus les deux armatures de renfort sont éloignées l'une de l'autre, plus la rigidité du revêtement est augmentée. Selon une forme de réalisation particulière, l'envers non tissé est constitué d'un complexe formé de la liaison entre, dans cet ordre, la deuxième armature de renfort et une première couche de non-tissé.

Préférentiellement, les moyens de liaison imprègnent l'épaisseur de la deuxième armature de renfort et partiellement l'épaisseur de la première couche de non-tissé, et de préférence imprègnent au maximum 50% de l'épaisseur de la première couche de non-tissé, et plus préférentiellement au maximum 30%.

Ces caractéristiques d'imprégnation permettent d'améliorer la résistance à la délamination de l'envers non tissé, sans dégrader les propriétés d'atténuation acoustique.

Selon une forme de réalisation particulière, l'envers non tissé est constitué d'un complexe formé de la liaison entre, successivement dans cet ordre, une deuxième couche de non-tissé, la deuxième armature de renfort et la première couche de non-tissé.

Cette seconde forme de réalisation permet d'améliorer davantage la rigidité, l'absorption des défauts du support de pose et les propriétés d'atténuation acoustique. Par ailleurs, la présence d'une deuxième couche de non-tissé permet également d'éloigner les armatures de renfort l'une de l'autre, améliorant ainsi la rigidité du revêtement.

Dans cette seconde forme de réalisation, les moyens de liaison imprègnent de préférence partiellement l'épaisseur de la deuxième couche de non-tissé, et de préférence imprègnent au maximum 75% de l'épaisseur de la deuxième couche de non-tissé, et plus préférentiellement au maximum 50%.

Comme évoqué précédemment, ces caractéristiques d'imprégnation sont avantageuses en ce sens qu'elles permettent une meilleure tenue à la délamination.

La première armature de renfort et/ou la deuxième armature de renfort sont des voiles de fibres de verre.

Le voile de fibre de verre est préféré pour la deuxième armature de renfort puisqu'il permet, lorsqu'il est lié directement à la face inférieure de la couche renforcée, de réaliser un support optimisé pour la liaison avec ladite couche renforcée, et permet également d'obtenir une meilleure résistance au poinçonnement qu'une grille de renfort.

Selon une forme de réalisation particulière, la première armature de renfort et la deuxième armature de renfort présentent chacune une épaisseur comprise entre 0.1 mm et 1 mm, et préférentiellement entre 0.3 mm et 0.5 mm.

Par ailleurs, la deuxième armature de renfort est liée à la première couche de non-tissé et/ou à la deuxième couche de non-tissé de préférence par l'intermédiaire d'une couche de colle, d'un matériau thermofusible ou d'une couche de plastisol gélifié.

Cette liaison assure la bonne cohésion et empêche la délamination entre la deuxième armature de renfort et la ou les couches de non-tissé, sans dégrader les performances mécaniques et/ou acoustiques de l'envers.

Selon d'autres caractéristiques non limitatives, prises seules ou en combinaison :
- la première couche de non-tissé et/ou la deuxième couche de non-tissé présentent une épaisseur comprise entre 0,5 mm et 2,5 mm, préférentiellement entre 0,7 mm et 1,2 mm, et un grammage compris entre 50 g/m² et 300 g/m² ;
- la première couche de non-tissé et/ou la deuxième couche de non-tissé présentent une résistance à la traction comprise entre 150N/50mm et 400N/50mm, et préférentiellement entre 150N/50mm et 250N/50mm, mesurée selon la norme ISO 1924/2
- la première armature de renfort et la deuxième armature de renfort présentent une résistance à la traction comprise entre 70N/50mm et 200N/50mm, préférentiellement entre 70N/50mm et 100N/50mm, mesurée selon la norme ISO 1924/2.

### Description des figures

[Fig. 1] la figure 1 est une représentation schématique illustrant une structure multicouche selon l'invention, où l'envers non tissé est lié à la face inférieure de la couche renforcée par une couche de colle, un matériau thermofusible ou une couche de plastisol gélifié, et ne comprend qu'une seule couche de non-tissé
[Fig. 2] la figure 2 est une représentation schématique similaire à celle de la figure 1, où l'envers non tissé comprend deux couches de non-tissé.
[Fig. 3] la figure 3 est une représentation schématique similaire à celle de la figure 1, où l'envers non tissé est lié par une couche moussée.
[Fig. 4] la figure 4 est une représentation schématique similaire à celle de la figure 3, où l'envers non tissé comprend deux couches de non-tissé.
[Fig. 5] la figure 5 est une représentation schématique similaire à celle de la figure 1, une couche moussée étant intégrée entre la couche renforcée et les moyens de liaison.
[Fig. 6] la figure 6 est une représentation schématique similaire à celle de la figure 2, une couche moussée étant intégrée entre la couche renforcée et les moyens de liaison.

### Description détaillée de l'invention

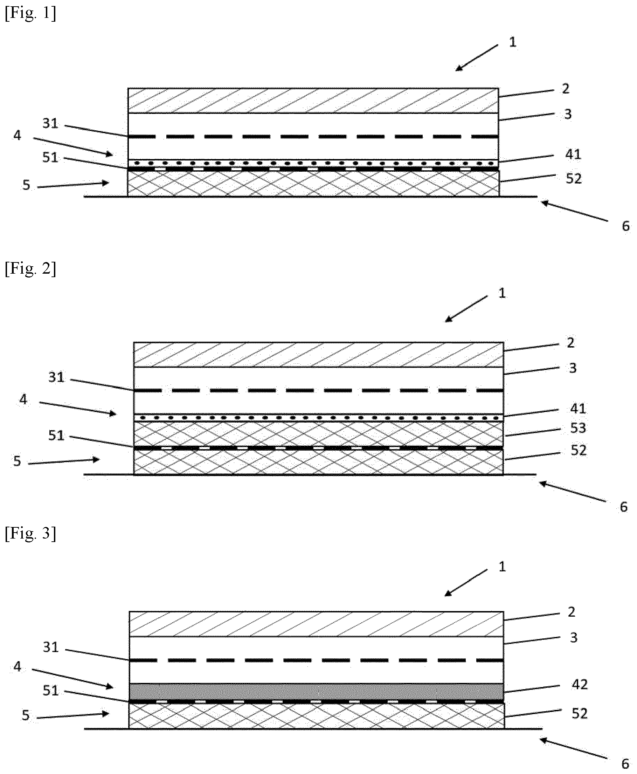

La figure 1 illustre une structure multicouche (1) pour la réalisation d'un revêtement de sol (6) selon l'invention, comprenant successivement une couche d'usure (2) supérieure liée à une couche renforcée (3), et un envers non tissé (5) lié à la face inférieure de la couche renforcée (3) par des moyens de liaison (4), par exemple sous la forme d'une couche de colle (41), d'un matériau thermofusible ou d'une couche de plastisol gélifié. Préférentiellement, la couche d'usure (2) est constituée de PVC, de linoléum, de polyoléfine ou de caoutchouc. La couche d'usure (2) peut être également transparente à la lumière visible de manière à ce qu'un décor imprimé en envers de la couche d'usure (2), en surface de la couche renforcée (3) ou encore sur un film disposé entre la couche d'usure (2) et la couche d'envers puisse être visible au travers de la couche d'usure (2). Selon l'invention, la couche d'usure (2) peut également être une couche décor obtenue par pressage ou calandrage de granulés de polymère teintés, ou par enduction et gélification d'un plastisol teinté. Préférentiellement, la couche d'usure (2) est une couche pleine et présente par exemple une épaisseur comprise entre 0,1 et 1 mm, plus préférentiellement entre 0,3 et 0,7 mm.

La couche d'usure (2) est liée à la couche renforcée (3) par toute technique appropriée bien connue de l'homme du métier. La couche renforcée (3) comprend une première armature de renfort (31), de préférence sous la forme d'un voile de fibres de verre. La couche renforcée (3) présente de manière préférentielle une épaisseur comprise entre 0,3 et 2 mm, plus préférentiellement entre 0,5 et 1,5 mm.

La première armature de renfort (31) peut à titre d'exemple se présenter aussi sous la forme d'une grille de renfort ou d'une couche non-tissé tel qu'un voile de fibres de verre ou de polyester. D'autres matériaux peuvent être utilisés pour réaliser les fibres du voile de renfort, par exemple le Polyéthylène, Polyéthylène Téréphtalate (PET), l'aramide, le carbone, le nitrile, l'éthylène vinyle acétate (EVA), le Polyéthylène haute densité (PEHD), le Polyéthylène basse densité (PEBD), le polychlorure de vinyle (PVC).

Le matériau thermofusible pouvant lier l'envers non tissé (5) à la couche renforcée (3) est par exemple utilisé sous la forme d'un poudrage de colle thermofusible destinée à fondre par une opération de laminage à chaud de l'envers non tissé (5) et de la couche renforcée (3). Des colles thermofusibles à base de polyester, co-polyester ou EVA (éthylène vinyle acétate) pourront par exemple être utilisées. Cet exemple particulier est seulement illustratif et n'est en rien limitatif ; d'autres matériaux thermofusibles pouvant bien évidemment être considérés.

Préférentiellement, la première armature de renfort (31) est noyée dans l'épaisseur de la couche renforcée (3), mais il n'est pas exclu dans le cadre de la présente invention qu'elle soit située intégrée à la face supérieure ou inférieure de la couche renforcée (3). A titre d'exemple, la couche renforcée (3) peut être obtenue par enduction avec un plastisol, par exemple PVC, puis gélification, des deux faces de la première armature de renfort (31). Dans le mode de réalisation illustré à la figure 1, où l'envers non tissé (5) est constitué d'un complexe formé de la liaison, dans cet ordre, entre une deuxième armature de renfort (51) et une première couche de non-tissé (52), les moyens de liaison (4) imprègnent l'épaisseur de la deuxième armature de renfort (51) et partiellement l'épaisseur de la première couche de non-tissé (52), et de préférence imprègnent au maximum 50% de l'épaisseur de la première couche de non-tissé (52), et plus préférentiellement au maximum 30%.

Les moyens de liaison (4) au sens général peuvent également comprendre tout type de colles, comme de la colle Co-Polyester, sans sortir du cadre de l'invention.

La deuxième armature de renfort (51) est préférentiellement constituée d'un voile de fibre de verre, qui permet de réaliser un support d'enduction pour du plastisol gélifié permettant aussi bien de lier ladite deuxième armature de renfort (51) à la couche renforcée (3) ou à la première couche de non tissé (52), et permet d'obtenir une meilleure résistance au poinçonnement qu'une grille de renfort.

De préférence, la première armature de renfort (31) et/ou la deuxième armature de renfort (51) peuvent présenter les caractéristiques suivantes :
- Fibres de verre présentant un diamètre compris entre 5µm et 15µm, et préférentiellement compris entre 10µm et 13µm, en mélange ;
- Longueur de fibre comprise entre 5mm et 15 mm
- Epaisseur de fibre comprise entre 0,1 mm et 1 mm, et préférentiellement entre 0,3 mm et 0,5 mm
- Grammage compris entre 30 g/m² et 100 g/m²
- Obtenue par voie sèche
- L'armature de renfort peut être aiguilletée (renfort mécanique), calandrée (pour calibrer l'épaisseur) et/ou fixée par apport de chaleur
- Résistance à la traction comprise entre 70N/50mm et 200N/50mm, préférentiellement entre 70N/50mm et 100N/50mm, mesurée selon la norme ISO 1924/2.

A titre d'exemple illustratif, la première armature de renfort (31) et/ou la deuxième armature peuvent être constituée par un voile de fibres de verre, lesdites fibres présentant un diamètre de 10µm et une longueur de 10mm.

L'envers non tissé (5), d'une épaisseur préférentiellement comprise entre 0,6mm et 2mm, comprend au moins une première couche de non-tissé (52), laquelle est en contact avec le sol, et constituée préférentiellement de feutrine, mais peut en alternative être constitué de tout autre textile non-tissé adéquat, sans sortir du cadre de l'invention.

Toujours selon la figure 1, la deuxième armature de renfort (51) et la première couche de non-tissé (52) sont positionnées de telle sorte que la face supérieure de la deuxième armature de renfort (51) soit en contact avec les moyens de liaison (4), ces derniers étant eux même en contact avec la face inférieure de la couche renforcée (3). La première couche de non-tissé (52) présente une face inférieure en contact avec le sol (6).

La liaison entre la deuxième armature de renfort (51) et la première couche de non-tissé (52) est préférentiellement assurée par l'intermédiaire d'une couche de colle (41), d'un matériau thermofusible ou d'une couche de plastisol gélifié. La liaison peut également être assurée par aiguilletage, ou tout autre moyen d'accroche mécanique.

Selon une autre variante, la liaison de l'envers non tissé (5) avec la surface de la couche renforcée (3) et/ou la liaison de la deuxième armature de renfort (51) avec une couche de non-tissé peut faire intervenir une étape de laminage à chaud.

La figure 2 est une variante présentant une deuxième forme de réalisation de l'envers non tissé (5), où celui-ci présente une deuxième couche de non-tissé (53). Sous cette forme, les moyens de liaison (4) sont directement en contact avec, et positionnées entre, la face inférieure de la couche renforcée (3) et la face supérieure de la deuxième couche de non-tissé (53).

Dans le mode de réalisation illustré par la figure 2, où l'envers non tissé (5) est constitué d'un complexe formé de la liaison, dans cet ordre, de la première couche de non-tissé (52), d'une deuxième armature de renfort (51) et d'une deuxième couche de non-tissé (53), les moyens de liaison (4) imprègnent partiellement l'épaisseur de la deuxième couche de non-tissé (53), et de préférence imprègnent au maximum 75% de l'épaisseur de la deuxième couche de non-tissé (53), et plus préférentiellement au maximum 50%.

La présence d'une deuxième couche de non-tissé (53) permet également d'éloigner la première armature de renfort (31) de la deuxième armature de renfort (51), ce qui a pour effet d'augmenter la rigidité du revêtement.

Selon les figures 1 et 2 et selon un mode de réalisation préférentiel, la première couche de non-tissé (52) et/ou la deuxième couche de non-tissé (53) peuvent présenter les caractéristiques suivantes :
- Types de fibres : au choix parmi les fibres de polyester, de polyamide, de polyéthylène téréphtalate, de polypropylène et/ou une combinaison de ces fibres,
- Epaisseur de première et/ou deuxième couche de non-tissé comprise entre 0,5 mm et 2,5 mm, et préférentiellement entre 0,7mm et 1,2 mm,
- Grammage compris entre 50 g/m² à 300 g/m².
- Résistance à la traction comprise entre 150N/50 mm et 400N/50mm, et préférentiellement entre 150N/50mm et 250N/50mm, mesurée selon la norme ISO 1924/2.

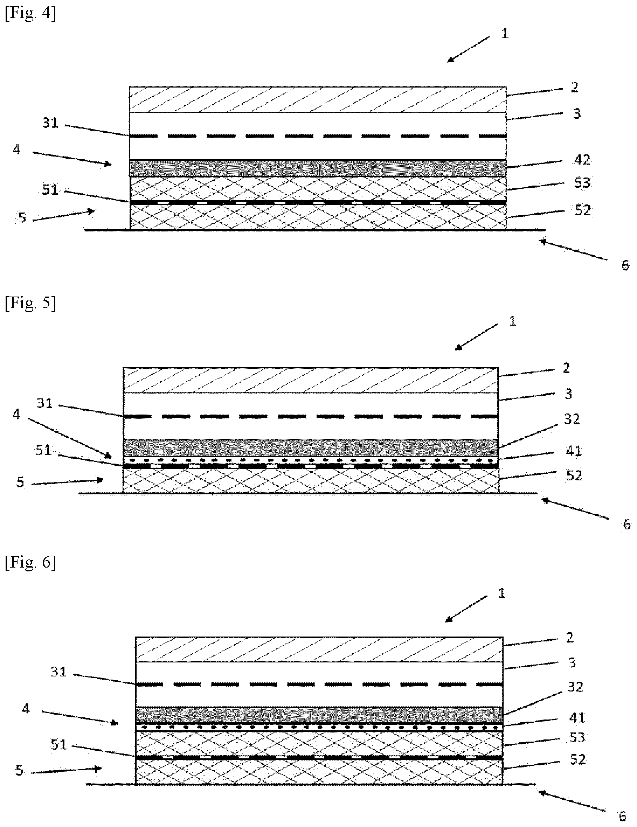

Les figures 3 et 4 illustrent une structure multicouche (1) similaire à celles respectivement des figures 1 et 2, où les moyens de liaison (4) sont sous la forme d'une couche moussée (42). Ceci permet d'améliorer les performances d'atténuation acoustique et, étant donné que la couche moussée (42) est positionnée entre les deux armatures de renfort, le risque de fragiliser le revêtement est limité. Selon ce mode de réalisation, la couche moussée (42) présente une épaisseur comprise entre 0,40 à 0,80mm et/ou une densité comprise entre 0,70 à 1,38. Ceci permet d'obtenir une couche moussée (42) de densité supérieure aux densités standard d'une couche moussée mais inférieure à une couche compacte afin de ne pas trop fragiliser la structure multicouche.

Selon un autre mode de réalisation, et pour obtenir le même effet technique, la couche renforcée (3) peut comprendre une couche moussée (32) d'envers, directement liée à l'envers non tissé (5) par l'intermédiaire des moyens de liaison (4), voir figures 5 et 6. La présence des moyens de liaison (4) permet de réaliser le moussage de la couche avant de lier l'envers non tissé (5) est donc d'augmenter son épaisseur et de diminuer sa densité. Selon ce mode de réalisation, la couche moussée (32) présente une épaisseur comprise entre 1,00 à 1,50mm et/ou une densité comprise entre 0,35 à 0,55. Ceci permet d'améliorer l'atténuation acoustique de la structure multicouche (1).

La quantité de plastisol déposée pour obtenir une couche moussée (32) ou (42) à partir d'un plastisol de PVC gélifié est par exemple comprise entre 400 et 600 g/m². Différents modes de réalisation d'une structure multicouche (1) selon l'invention ont été testés pour l'évaluation de leur propriétés mécaniques et acoustiques, les principaux résultats sont listés dans le tableau ci-après :

**[Tableau 1]**

| Mode de réalisation | Envers non tissé A = couche de non tissé | Envers non tissé selon l'invention B = Armature en fibres de verre + Couche de non tissé | Envers non tissé selon l'invention C = Couche de non-tissé + Armature en fibres de verre + Couche de non tissé | Envers non tissé selon l'invention D = Couche de non-tissé + Armature en fibres de verre + Couche de non tissé |
|---|---|---|---|---|
| Couche d'usure (2) transparente (Epaisseur en mm) | 0,5 | 0,5 | 0,5 | 0,5 |
| Couche renforcée (3) (Epaisseur en mm) | 0,8 | 0,8 | 0,8 | 0,8 |
| Couche moussée (32) (Epaisseur en mm) | 1,3 | 1,3 | 1,3 | 1,3 |
| Moyens de liaison sous forme de plastisol PVC gélifié (Epaisseur en mm) | 0,5 (15% de l'épaisseur de l'envers non tissé est noyée dans la couche de liaison) | 0,3 | 0,3 | 0,3 |
| Caractéristiques de l'envers non tissé (5) | Epaisseur : 0,6mm | -Epaisseur: 1,1mm | Epaisseur : 1,3mm | Epaisseur : 2mm |
| | | -Densité de l'armature de renfort : 35g/m² | -Densité de l'armature de renfort : 35g/m² | -Densité de l'armature de renfort : 35g/m² |
| | - Densité de la couche de non tissé : 80g/m² | | | |
| | | - Densité de la colle poudrée CoPolyester: 20g/m² | - Densité de la colle poudrée CoPolyester: 20g/m² | - Densité de la colle poudrée CoPolyester: 20g/m² |
| | | - Densité de la couche de non-tissé en Polyester :80g/m² | - Densité des couches de non-tissé :160g/m² | - Densité des couches de non-tissé : 80g/m² |
| Poinçonnement Statique rémanent 2h30 (Epaisseur en mm) | 0,22 | 0,23 | Non testé | 0,27 |
| Poinçonnement Statique rémanent 48h (Epaisseur en mm) | 0,13 | 0,20 | Non testé | 0,20 |
| Acoustique (Atténuation) | 18dB | 19dB | 20dB | 21db |

Plus particulièrement, le précédent tableau de résultats a été établi selon une structure multicouche (1) comprenant :
- Une couche d'usure (2) sous la forme d'une couche enduite transparente obtenue à partir de PVC gélifié d'une épaisseur de 0,5mm.
- Une couche renforcée (3) sous la forme d'un voile de verre enduit sur ses deux faces d'une couche de plastisol PVC gélifié. La face supérieure est imprimée par héliogravure. Le voile de verre est donc noyé entièrement. Le voile utilisé présente une épaisseur de 0,7 mm et un grammage de 70g/m².
- Couche moussée (32) sous la forme d'une couche de plastisol PVC gélifié et moussée à l'aide d'un agent gonflant type Azodicarbonamide, densité de 0,37 environ.
- Quatre envers non tissés (5) différent, à savoir A (selon l'état de la technique), B (selon l'invention), C (selon l'invention) et D (selon l'invention) - voir ligne 1 du tableau.

D'après le tableau, il est clairement mis en évidence une atténuation acoustique de 18dB pour le mode de réalisation avec l'envers non tissé A de l'état de la technique, et une atténuation acoustique supérieure ou égale à 19dB pour les modes de réalisation avec les envers non tissés B, C et D selon l'invention.

Il est également mis en évidence un poinçonnement statique rémanent 2h30 inférieur à 0,30 mm selon un classement UPEC P2 et un poinçonnement statique rémanent 48h inférieur ou égal à 0,30 mm pour les modes de réalisation avec les envers non tissés B et D selon l'invention.

On peut ainsi déduire de ces précédents résultats une amélioration des performances acoustiques tout en ayant une bonne résistance au poinçonnement pour la structure multicouche selon l'invention. De manière avantageuse, il peut être noté qu'une double couche de non-tissé selon la variante D améliore l'atténuation acoustique.

La présente invention trouve une application avantageuse dans les marchés U2s, U3 et U4 selon le classement UPEC. La présente invention peut être utilisée dans un cadre résidentiel ou hospitalier, voire dans les secteurs des transports et/ou de l'aéronautique. Les avantages de l'invention ressortent bien de la description, plus particulièrement la présente invention fournit une structure multicouche pour la réalisation d'un revêtement de sol présentant une rigidité améliorée, une absorption des défauts du support, une capacité à plomber, une stabilité dimensionnelle, une capacité de dilatation et une résistance au poinçonnement vérifiée par des tests dynamiques tels que des tests avec un pied de meuble, une chaise à roulettes ou un déplacement de lit hospitalier.

## Revendications

1. Structure multicouche (1) pour la réalisation d'un revêtement de sol (6) comprenant une couche supérieure d'usure (2) liée à une couche renforcée (3) avec une première armature de renfort (31), ***caractérisée* en ce que** la face inférieure de la couche renforcée (3) est liée avec un envers non tissé (5) renforcé avec une deuxième armature de renfort (51), et **en ce que** la première armature de renfort (31) et/ou la deuxième armature de renfort (51) sont des voiles de fibres de verre.

2. Structure multicouche (1) selon la revendication 1, ***caractérisée* en ce que** l'envers non tissé (5) est lié à la face inférieure de la couche renforcée (3) par l'intermédiaire de moyens de liaison (4), de préférence sous la forme d'une couche moussée (42), d'une couche de colle (41), d'un matériau thermofusible ou d'une couche de plastisol gélifié.

3. Structure multicouche (1) selon la revendication 2, ***caractérisée* en ce que** l'envers non tissé (5) est constitué d'un complexe formé de la liaison entre, dans cet ordre, la deuxième armature de renfort (51) et une première couche de non-tissé (52).

4. Structure multicouche (1) selon la revendication 3, ***caractérisée* en ce que** les moyens de liaison (4) imprègnent l'épaisseur de la deuxième armature de renfort (51) et partiellement l'épaisseur de la première couche de non-tissé (52), et de préférence imprègnent au maximum 50% de l'épaisseur de la première couche de non-tissé (52), et plus préférentiellement au maximum 30%.

5. Structure multicouche (1) selon la revendication 2, ***caractérisée* en ce que** l'envers non tissé (5) est constitué d'un complexe formé de la liaison entre, successivement dans cet ordre, une deuxième couche de non-tissé (53), la deuxième armature de renfort (51) et une première couche de non-tissé (52).

6. Structure multicouche (1) selon la revendication 5, ***caractérisée* en ce que** les moyens de liaison (4) imprègnent partiellement l'épaisseur de la deuxième couche de non-tissé (53), et de préférence imprègnent au maximum 75% de l'épaisseur de la deuxième couche de non-tissé (53), et plus préférentiellement au maximum 50%.

7. Structure multicouche (1) selon l'une des revendications précédentes, ***caractérisée* en ce que** la première armature de renfort (31) et la deuxième armature de renfort (51) présentent chacune une épaisseur comprise entre 0.1 mm et 1 mm, et préférentiellement entre 0.3 mm et 0.5 mm.

8. Structure multicouche (1) selon l'une des revendications 3 et 5, ***caractérisée* en ce que** la deuxième armature de renfort (51) est liée à la première couche de non-tissé (52) et/ou à la deuxième couche de non-tissé (53) par l'intermédiaire d'une couche de colle (41), d'un matériau thermofusible ou d'une couche de plastisol gélifié.

9. Structure multicouche (1) selon l'une des revendications 3 et 5, ***caractérisée* en ce que** la première couche de non-tissé (52) et/ou la deuxième couche de non-tissé (53) présentent une épaisseur comprise entre 0,5 mm et 2,5 mm, préférentiellement entre 0,7 mm et 1,2 mm, et un grammage compris entre 50 g/m² et 300 g/m².

10. Structure multicouche (1) selon l'une des revendications 3 et 5, ***caractérisée* en ce que** la première couche de non-tissé (52) et/ou la deuxième couche de non-tissé (53) présentent une résistance à la traction comprise entre 150N/50 mm et 400N/50mm, et préférentiellement entre 150N/50mm et 250N/50mm, mesurée selon la norme ISO 1924/2.

11. Structure multicouche (1) selon la revendication 1, ***caractérisée* en ce que** la première armature de renfort (31) et la deuxième armature de renfort (51) présentent une résistance à la traction comprise entre 70N/50mm et 200N/50mm, préférentiellement entre 70N/50mm et 100N/50mm, mesurée selon la norme ISO 1924/2.

12. Structure multicouche (1) selon la revendication 2, ***caractérisée* en ce que** la couche renforcée (3) comprend une couche moussée (32) d'envers, directement liée à l'envers non tissé (5) par l'intermédiaire des moyens de liaison (4).

## Patentansprüche

1. Mehrschichtstruktur (1) zur Herstellung eines Bodenbelags (6), bestehend aus einer oberen Nutzschicht (2), die mit einer verstärkten Schicht (3) verbunden ist, die eine erste Verstärkungsmasche (31) aufweist, **gekennzeichnet dadurch, dass** die Unterseite der verstärkten Schicht (3) mit einem nicht gewebten Rücken (5) verbunden ist, der mit einem zweiten Verstärkungsgewebe (51) verstärkt ist, und dass das erste Verstärkungsgewebe (31) und/oder das zweite Verstärkungsgewebe (51) aus Glasfaservliesen bestehen.

2. Mehrschichtstruktur (1) nach Anspruch 1, **gekennzeichnet dadurch, dass** der nicht gewebte Rücken (5) an der Unterseite der verstärkten Schicht (3) durch Verbindungsmittel (4) verbunden ist, vorzugsweise in Form einer geschäumten Schicht (42), einer Klebeschicht (41), eines thermofusiblen Materials oder einer gelierten Plastisolschicht.

3. Mehrschichtstruktur (1) nach Anspruch 2, **gekennzeichnet dadurch, dass** der nicht gewebte Rücken (5) aus einem Verbund besteht, der durch die Verbindung zwischen, in dieser Reihenfolge, dem zweiten Verstärkungsgewebe (51) und einer ersten Vlieslage (52) gebildet wird.

4. Mehrschichtstruktur (1) nach Anspruch 3, **gekennzeichnet dadurch, dass** die Verbindungsmittel (4) die Dicke des zweiten Verstärkungsgewebes (51) und teilweise die Dicke der ersten Vlieslage (52) durchdringen, bevorzugt höchstens 50% der Dicke der ersten Vlieslage (52) durchdringen und noch bevorzugter höchstens 30%.

5. Mehrschichtstruktur (1) nach Anspruch 2, **gekennzeichnet dadurch, dass** der nicht gewebte Rücken (5) aus einem Verbund besteht, der durch die Verbindung zwischen, nacheinander in dieser Reihenfolge, einer zweiten Vlieslage (53), dem zweiten Verstärkungsgewebe (51) und einer ersten Vlieslage (52) gebildet wird.

6. Mehrschichtstruktur (1) nach Anspruch 5, **gekennzeichnet dadurch, dass** die Verbindungsmittel (4) die Dicke der zweiten Vlieslage (53) teilweise durchdringen, bevorzugt höchstens 75% der Dicke der zweiten Vlieslage (53) durchdringen und noch bevorzugter höchstens 50%.

7. Mehrschichtstruktur (1) nach einem der vorherigen Ansprüche, **gekennzeichnet dadurch, dass** die erste Verstärkungsmasche (31) und die zweite Verstärkungsmasche (51) jeweils eine Dicke zwischen 0,1 mm und 1 mm haben, bevorzugt zwischen 0,3 mm und 0,5 mm.

8. Mehrschichtstruktur (1) nach den Ansprüchen 3 und 5, **gekennzeichnet dadurch, dass** das zweite Verstärkungsgewebe (51) mit der ersten Vlieslage (52) und/oder der zweiten Vlieslage (53) durch eine Klebeschicht (41), ein thermofusibles Material oder eine gelierte Plastisolschicht verbunden ist.

9. Mehrschichtstruktur (1) nach den Ansprüchen 3 und 5, **gekennzeichnet dadurch, dass** die erste Vlieslage (52) und/oder die zweite Vlieslage (53) eine Dicke zwischen 0,5 mm und 2,5 mm haben, bevorzugt zwischen 0,7 mm und 1,2 mm, und ein Flächengewicht zwischen 50 g/m² und 300 g/m² haben.

10. Mehrschichtstruktur (1) nach den Ansprüchen 3 und 5, **gekennzeichnet dadurch, dass** die erste Vlieslage (52) und/oder die zweite Vlieslage (53) eine Zugfestigkeit zwischen 150N/50 mm und 400N/50 mm haben, bevorzugt zwischen 150N/50 mm und 250N/50 mm, gemessen nach ISO 1924/2.

11. Mehrschichtstruktur (1) nach Anspruch 1, **gekennzeichnet dadurch, dass** die erste Verstärkungsmasche (31) und die zweite Verstärkungsmasche (51) eine Zugfestigkeit zwischen 70N/50 mm und 200N/50 mm haben, bevorzugt zwischen 70N/50 mm und 100N/50 mm, gemessen nach ISO 1924/2.

12. Mehrschichtstruktur (1) nach Anspruch 2, **gekennzeichnet dadurch, dass** die verstärkte Schicht (3) eine geschäumte Rückenlage (32) umfasst, die direkt mit dem nicht gewebten Rücken (5) durch die Verbindungsmittel (4) verbunden ist.

## Claims

1. Multilayer structure (1) for the production of a floor covering (6) comprising an upper wear layer (2) bonded to a reinforced layer (3) with a first reinforcement mesh (31), **characterized in that** the lower face of the reinforced layer (3) is bonded to a non-woven backing (5) reinforced with a second reinforcement mesh (51), and wherein the first reinforcement mesh (31) and/or the second reinforcement mesh (51) are made of fiberglass veils.

2. Multilayer structure (1) according to claim 1, **characterized in that** the non-woven backing (5) is bonded to the lower face of the reinforced layer (3) through connecting means (4), preferably in the form of a foamed layer (42), an adhesive layer (41), a thermofusible material, or a gelled plastisol layer.

3. Multilayer structure (1) according to claim 2, **characterized in that** the non-woven backing (5) consists of a complex formed by the bonding between, in this order, the second reinforcement mesh (51) and a first non-woven layer (52).

4. Multilayer structure (1) according to claim 3, **characterized in that** the connecting means (4) impregnate the thickness of the second reinforcement mesh (51) and partially the thickness of the first non-woven layer (52), preferably impregnating a maximum of 50% of the thickness of the first non-woven layer (52), and more preferably a maximum of 30%.

5. Multilayer structure (1) according to claim 2, **characterized in that** the non-woven backing (5) consists of a complex formed by the bonding between, successively in this order, a second non-woven layer (53), the second reinforcement mesh (51), and a first non-woven layer (52).

6. Multilayer structure (1) according to claim 5, **characterized in that** the connecting means (4) partially impregnate the thickness of the second non-woven layer (53), preferably impregnating a maximum of 75% of the thickness of the second non-woven layer (53), and more preferably a maximum of 50%.

7. Multilayer structure (1) according to any of the preceding claims, **characterized in that** the first reinforcement mesh (31) and the second reinforcement mesh (51) each have a thickness between 0.1 mm and 1 mm, and preferably between 0.3 mm and 0.5 mm.

8. Multilayer structure (1) according to claims 3 and 5, **characterized in that** the second reinforcement mesh (51) is bonded to the first non-woven layer (52) and/or the second non-woven layer (53) through an adhesive layer (41), a thermofusible material, or a gelled plastisol layer.

9. Multilayer structure (1) according to claims 3 and 5, **characterized in that** the first non-woven layer (52) and/or the second non-woven layer (53) have a thickness between 0.5 mm and 2.5 mm, preferably between 0.7 mm and 1.2 mm, and a grammage between 50 g/m² and 300 g/m².

10. Multilayer structure (1) according to claims 3 and 5, **characterized in that** the first non-woven layer (52) and/or the second non-woven layer (53) have a tensile strength between 150N/50 mm and 400N/50 mm, preferably between 150N/50 mm and 250N/50 mm, measured according to ISO 1924/2.

11. Multilayer structure (1) according to claim 1, **characterized in that** the first reinforcement mesh (31) and the second reinforcement mesh (51) have a tensile strength between 70N/50 mm and 200N/50 mm, preferably between 70N/50 mm and 100N/50 mm, measured according to ISO 1924/2.

12. Multilayer structure (1) according to claim 2, **characterized in that** the reinforced layer (3) includes a foamed backing layer (32), directly bonded to the non-woven backing (5) through the connecting means (4).
